(19) Europäisches Patentamt
European Patent Office
Office européen des brevets

(11) **EP 1 621 913 B1**

(12) **EUROPEAN PATENT SPECIFICATION**

(45) Date of publication and mention
of the grant of the patent:
**20.06.2007 Bulletin 2007/25**

(51) Int Cl.:
*G02B 23/06* (2006.01)   *H04N 5/225* (2006.01)
*G02B 23/04* (2006.01)   *G02B 26/08* (2006.01)

(21) Application number: **04730724.4**

(22) Date of filing: **30.04.2004**

(86) International application number:
**PCT/JP2004/006320**

(87) International publication number:
**WO 2004/097494 (11.11.2004 Gazette 2004/46)**

(54) **DIGITAL CAMERA-EQUIPPED GROUND TELESCOPE**

MIT DIGITALER KAMERA AUSGESTATTETES TELESKOP

TELESCOPE TERRESTRE EQUIPE D'UNE CAMERA NUMERIQUE

(84) Designated Contracting States:
**DE FR**

(30) Priority: **02.05.2003 JP 2003126834**

(43) Date of publication of application:
**01.02.2006 Bulletin 2006/05**

(73) Proprietor: **Kowa Kabushiki Kaisha
Nagoya-shi,
Aichi 460-8625 (JP)**

(72) Inventors:
• **NAKANO, Hirokatsu
c/o Kowa Kabushiki Kaisha
Miyanari-cho Gamagori-shi,Aichi 443-0041 (JP)**
• **GOTO, Yoshihide
c/o Kowa Kabushiki Kaisha
Miyanari-cho Gam gori-shi,Aichi 443-0041 (JP)**
• **TOMINAGA, Shuichi2c/o Kowa Kabushiki Kaisha
Miyanari-cho Gamagori-shi,Aichi 443-0041 (JP)**

• **ISHIDA, Takayuki
c/o Kowa Kabushiki Kaisha Denkiko
Miyanari-cho Gamagori-shi,Aichi 443-0041 (JP)**

(74) Representative: **Kronthaler, Wolfgang N.K.
Kronthaler, Schmidt & Coll.,
Steinsdorfstrasse 5
80538 München (DE)**

(56) References cited:
**JP-A- 9 281 407          JP-A- 9 281 595
JP-A- 10 294 888          JP-A- 62 237 870
JP-A- 2000 019 575          JP-A- 2000 162 495
US-A1- 2004 100 690**

• **PATENT ABSTRACTS OF JAPAN vol. 004, no. 160 (P-035), 8 November 1980 (1980-11-08) -& JP 55 106424 A (RICOH CO LTD), 15 August 1980 (1980-08-15)**
• **PATENT ABSTRACTS OF JAPAN vol. 2003, no. 12, & JP 2004 226579 A (KOWA CO), 12 August 2004 (2004-08-12)**

EP 1 621 913 B1

**Description**

Technical Field

The present invention relates to a terrestrial telescope with a digital camera that uses a means of splitting the optical path so that the optical path goes to the imaging element and the observation optical system.

Background Art

Terrestrial telescopes having a magnification factor ranging from about 20 to 60 are used extensively for observing wild birds and other fauna. Terrestrial telescopes include those based on a Galilean telescope configuration comprising a positive (convex) lens and a negative (concave) lens that functions as an erecting system, and those based on a Keplerian telescope configuration comprising just a positive (convex) lens, to which are added prisms or other such elements to constitute an erecting system. Any terrestrial telescopes are configured such that a user can observe an erect image.

As well as being able to use such telescopes to observe natural flora and fauna, users want to be able to record the images. In Patent Document 1 (JP 2003-248266), the present applicant has already proposed a configuration for a terrestrial telescope with a digital camera that is able to record an observed image and also able to observe a clear and sharp special image in a system in which the observed image can be photographed.

In Patent Document 1 the structure of the main optical system except for the observation optical system is similar to that of a single lens reflex camera, and the optical system uses a total-reflection quick-return mirror.

Unlike a single lens reflex camera that uses silver-halide film, a single lens reflex digital camera is known that uses a fixed half-mirror to split the optical path so that the beam transmitted by the imaging lens goes to the observation optical system and the imaging element. This makes it possible to continuously use images on the imaging element for display on a monitor, auto-focus processing, calculating exposure, and so forth, and because there is no movable mirror, the configuration can be made simple and low-cost. On the other hand, this configuration disadvantageously reduces the amount of light.

In this respect, as shown by Patent Document 2 (JP 2000-162495), an optical system is disclosed in which a half-mirror constituted as a quick-return mirror is used to deflect part of the light beam from the subject through the objective lens to the observation optical system and the rest of the beam to the imaging element. In this Publication, the half-mirror is normally located at an observation position at which it deflects part of the subject light beam to the observation optical system and is controlled during imaging to be removed from the imaging optical path. In Patent Document 2, when the half-mirror is in the observation position, the imaging element receives a beam through the half-mirror and photo-electrically converts it to calculate and memorize the focusing position of the objective lens when the half-mirror will be retracted. When the half-mirror is actually retracted to the imaging position during the imaging, the objective lens is moved to the calculated focus position.

The configuration disclosed by Patent Document 2 is advantageous in that it avoids light loss during the imaging of the subject and can move the imaging lens to correct a focusing error arising when the half-mirror is retracted. However, it also has drawbacks in that a processor and memory are required for calculating and storing the focus position, which increases the manufacturing cost.

A further example of a camera having a quick return mirror and optical path compensation is known from JP 55 106424.

A task of the present invention is therefore to provide a terrestrial telescope with a digital camera that enables the imaging element to continuously perform imaging without loss of light during imaging, and in which the focus position of the imaging element can be corrected with a simple and low-cost configuration.

Disclosure of Invention

To solve such a task, the present invention employs an arrangement comprising a group of objective lenses; an imaging element disposed behind said group of objective lenses and constituting an imaging optical system in cooperation with said group of objective lenses; a retractable optical-path-splitting means disposed as optical-path-splitting means between said group of objective lenses and said imaging element; an observation optical system for observing an optical image that is split outside of the optical path of said imaging optical system by said optical-path-splitting means; and an imaging position correction means in which, when said optical-path-splitting means is retracted from the optical axis of said imaging optical system, an optical element for correcting an change in image-formation position caused by retraction of said optical-path-splitting means is inserted into the optical axis of said imaging optical system in association with the retraction of said optical-path-splitting means.

The invention further employs an arrangement in which said optical element is plane glass having a thickness that corrects a change in image-formation position in the optical axis direction caused by retraction of said optical-path-splitting means.

The invention further employs an arrangement in which said imaging position correction means controls retraction of said optical-path-splitting means and insertion of said optical element by means of a guide lever member that supports said optical-path-splitting means on one end and said optical element on another end.

The invention further employs an arrangement in which said plane glass is inserted perpendicularly to the optical axis of said imaging optical system.

The invention further employs an arrangement in which the light-transmitting surface of said optical-path-splitting means is constituted as a plane that is inclined relative to the reflecting surface of said optical-path-splitting means so as to correct an image-formation positional deviation in the direction crossing the central optical axis due to the central optical axis deviation in said imaging element arising from when said optical-path-splitting means is inserted and when it is retracted.

The invention further employs an arrangement in which said optical-path-splitting means is a half-mirror.

Brief Description of Drawings

Figure 1 is an explanatory view showing the general configuration of a terrestrial telescope with a digital camera according to the first embodiment of the present invention;

Figure 2 is an explanatory view showing the quick-return half-mirror inserted into the main optical system during observation in the apparatus of Figure 1;

Figure 3 is an explanatory view showing the plane glass inserted into the main optical system during imaging in the apparatus of Figure 1;

Figure 4 is a table showing the amounts of image deviation produced by the quick-return half-mirror in the apparatus of Figure 1, and the corresponding calculated thicknesses of the plane glass used to correct the deviation; and

Figure 5 is an explanatory view showing the configuration of essential portions of a terrestrial telescope with a digital camera according to the second embodiment of the present invention.

Best Mode for Carrying Out the Invention

Referring to the accompanying drawings, the embodiments of the invention will be described in the following.

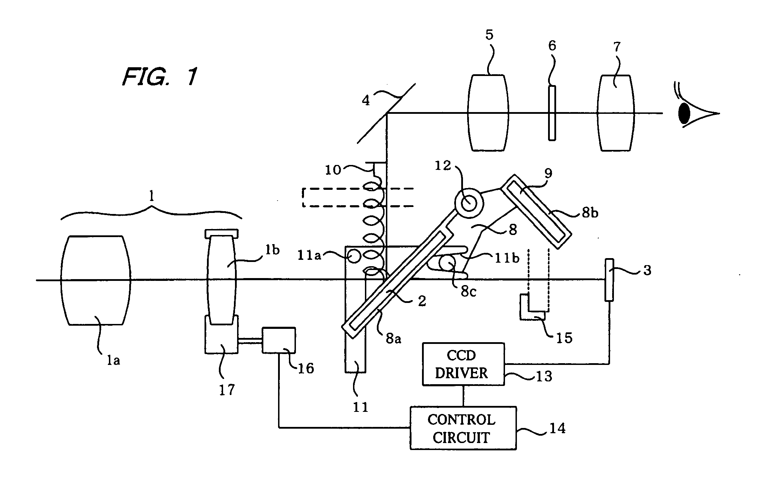

Figure 1 shows the main parts of the terrestrial telescope with a digital camera configured according to the present invention. In Figure 1, a light beam transmitted by a group of objective lenses 1 that comprises a fixed lens group 1a and a movable focusing lens group 1b falls incident on a quick-return half-mirror (shortened to "QR half-mirror" hereinbelow) 2 that normally intersects the main optical axis (the optical axis of the group of objective lenses 1) at an angle of 45 degrees.

The movable focusing lens group 1b is maintained by a lens frame 17 and can be moved along the main optical axis by an AF (automatic focusing) motor 16.

The beam of light transmitted by the QR half-mirror 2 impinges on an imaging element (such as a CCD or CMOS imaging element) 3 located on the focal plane. On the other hand, the beam of light reflected by the QR half-mirror 2 impinges on the observation optical system and, via an erecting optical system composed of a combination of a penta roof prism (not shown) or a reflecting mirror 4 and a relay lens 5, forms a spatial image on a reticle 6 located at a position that is a conjugate to that of the focal plane. A user can observe the image as an erect image via an ocular 7.

The reflectance of the QR half-mirror 2 is arbitrary. However, a reflectance of 80% to 90% is used so that most of the light goes to the observation optical system, facilitating observation by a user.

The QR half-mirror 2 is affixed to a mirror holder 8a provided on an end of a mirror guide lever 8 of metal or plastics. The mirror guide lever 8 can rotate about an axis of rotation 12. A plane glass holder 8b is provided on the opposite end of the mirror guide lever 8 located at the other side of the axis of rotation 12. A plane glass 9 is affixed to the plane glass holder 8b. The transmissivity of the plane glass 9 is substantially 100%.

In the example of Figure 1, the QR half-mirror 2 and plane glass 9 are maintained at an angle of 90 degrees to each other by the mirror holder 8a and plane glass holder 8b.

Attached to the mirror holder 8a is an extension spring 10 which urges the mirror holder 8a and QR half-mirror 2 around the axis of rotation 12 in a clockwise direction which is the direction of retraction from the imaging optical path.

During observation, the QR half-mirror 2 is kept at 45 degrees to the main optical axis against the urging of the extension spring 10 by an L-shaped retaining lever 11. The retaining lever 11 has a groove 11b at the end of its horizontal arm to engage with a pin 8c provided on the mirror guide lever 8. The retaining lever 11 can rotate about an axis of rotation 11a in the bend between the two arms of the L shape. The retaining lever 11 is maintained during observation in the position indicated in the drawing by a solid line using a solenoid or other such mechanical means, which are connected with a release button (not shown) for triggering to perform imaging. Thus, during observation, the QR half-mirror 2 is maintained at 45 degrees to the main axis.

When an imaging operation is initiated by the user, the retaining lever 11 is released. This allows the mirror guide lever 8 to be rotated rapidly clockwise by the force of the extension spring 10, moving the mirror holder 8a and QR half-mirror 2 to the respective positions indicated by the dotted lines.

As described, the QR half-mirror 2 and plane glass 9 are maintained at 90 degrees to each other by the mirror holders 8a and 8b, so the movement of the QR half-mirror 2 to the horizontal position shown by the dotted line causes the plane glass 9 to move into a position in front of the imaging element 3 where it forms an angle of 90 degrees with respect to the optical axis of the group of objective lenses 1. The position of the plane glass 9 (QR half-mirror 2) during imaging is determined by the engagement of the plane glass holder 8b with a stop 15.

In this way, all of the light transmitted by the group of objective lenses 1 reaches the imaging element 3, so that the optical image of the subject falls incident on the imaging element 3 without loss of light due to the QR half-mirror 2.

A CCD driver 13 drives the imaging element 3, whose output is input to a control circuit 14 composed of a microprocessor, memory and other such components. Image data received from the imaging element 3 during the imaging is stored on a memory card or other such recording medium (not shown) by the control circuit 14. In this embodiment, during observation the light from the subject is able to enter the imaging element 3 via the QR half-mirror 2. Therefore, the image data thus obtained from the imaging element 3 during observation can be processed for display on a monitor (not shown), processed for automatic focusing by using the AF motor 16 to control the movable focusing lens group 1b, or used for exposure calculations (exposure control by half-press of the release button), and so forth.

The operation of the terrestrial telescope with a digital camera thus configured will now be described.

A user half-presses the release button (not shown) to turn a half-press switch (not shown) on when the QR half-mirror 2 is in the observation position shown in Figure 1. The control circuit 14 then detects the light from the subject entering the imaging element 3 via the QR half-mirror 2 and performs photoelectrical conversion to detect the brightness and the contrast by a conventional contrast detection method.

The control circuit 14 can then determine the electronic shutter speed of the imaging element based on the detected brightness of the subject, drive the AF motor 16 based on the detected contrast, and control the automatic focusing process by moving the movable focusing lens group 1b along the optical axis. That is, the control circuit 14 drives the AF motor 16 to move the movable focusing lens group 1b to the focus position based on the contrast of the subject on the imaging element 3 such that the imaging element 3 can produce an image with the optimum contrast.

The focus position is based on the photoelectrical output of the subject image transmitted by the QR half-mirror 2 to fall incident on the imaging element 3. When the QR half-mirror 2 is retracted for imaging, the focus position will change unless the plane glass 9 is inserted into position.

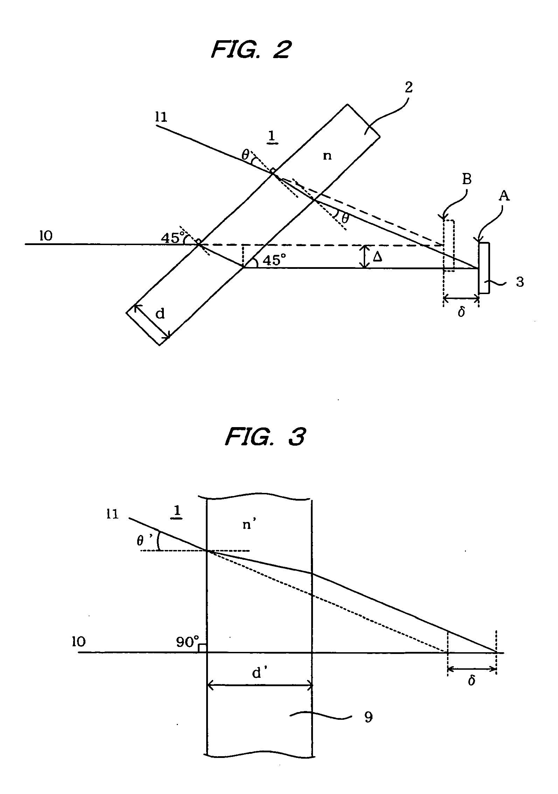

In Figure 2, it is assumed that A is the position of an image formed by the light transmitted by a QR half-mirror 2 having a thickness d, and B is the position of the image when there is no QR half-mirror 2 or plane glass 9. The image-formation position A will be further away from the QR half-mirror 2 than image-formation position B because the refractive index n of the QR half-mirror 2 is n > 1 (refractive index n of air is 1).

The image-formation positional deviation δ between when there is a QR half-mirror 2 and when there is neither a QR half-mirror 2 nor a plane glass 9 can be geometrically expressed as shown in Equation (1), taking into account the positional shift of image-formations by the central beam 10 and the peripheral beam 11.

$$\delta = \frac{d}{\cos\theta - \sin\theta}\left\{\frac{\sqrt{2n^2-1}-1}{\sqrt{4n^2-2}}(\cos\theta + \sin\theta) - \sqrt{2}(\sin\theta - \frac{\cos\theta\sin\theta}{\sqrt{n^2-\sin^2\theta}})\right\} \quad (1)$$

Here, the glass (or whatever other material is used) of the QR half-mirror 2 is assumed to have a refractive index of n, the angle of incidence of the central beam 10 on the QR half-mirror 2 is assumed to be 45 degrees, and the angle of incidence of the peripheral beam 11 on the QR half-mirror 2 is assumed to be θ.

In this embodiment, the deviation between image-formation positions A and B is corrected by means of the plane glass 9. When the release button is fully depressed, the retaining lever 11 rotates counterclockwise, allowing the QR half-mirror 2 released to retract and the plane glass 9 to descend into the optical axis until it engages with the stop 15.

Figure 3 shows the plane glass 9 inserted into the main optical axis during imaging, wherein it is assumed that the plane glass 9 is inserted perpendicularly to the optical axis after the retraction of the QR half-mirror 2. The deviation 6 in the position of the images formed by the central beam 10 and the peripheral beam 11 can be approximated as shown in Equation (2) with the refractive index n' of the plane glass 9 and the thickness d' of the plane glass 9, wherein the refractive index n' is the same as n if the glass of the plane glass 9 is the same as that of the QR half-mirror 2.

$$\delta = d'(1 - \frac{1}{n'}) \quad (2)$$

Equation (2) is based on Snell's law and geometrical considerations. When the plane glass 9 is inserted so that it intersects the optical axis at an angle of 90 degrees as shown in Figure 3, Equation (2) teaches that the term relating to the angle of incidence θ' of the peripheral beam 11 can be neglected and the image deviation δ is determined by the thickness d' and refractive index n' of the plane glass 9. It therefore follows that the required thickness d' of the plane glass 9 can be calculated by resolving the equations in respect of plane glass thickness d' by substituting the right-side term of Equation (1) for the left-side term of Equation (2) to equalize the amount of image deviation δ of the left sides of Equations (1) and (2).

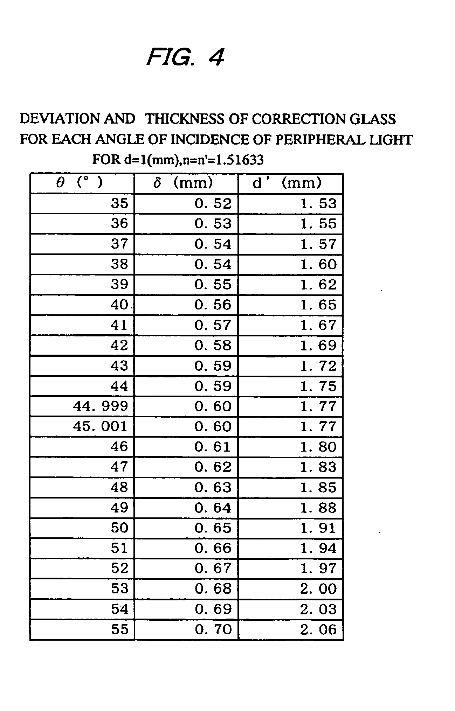

Figure 4 shows the calculated values. Specifically, the table lists the calculated values obtained using Equations (1) and (2) under the condition that a QR half-mirror 2 has thickness d of 1 (mm) and the QR half-mirror 2 and plane glass 9 have the same glass with a refractive index n = n' = 1.51633.

The calculation results will now be considered.

The results of Figure 4 show that the amount of deviation δ to be corrected is not constant, but depends on the angle of incidence θ of the peripheral beam 11 shown in Figure 2. If the QR half-mirror 2 is inserted at an angle of 45 degrees, the deviation δ increases with the increase in the angle of incidence θ of the peripheral beam 11. (There is a special case, which is when θ is 45 degrees at which δ = infinite and there is no image formation.) Thus, it can be said that coma aberration produced by the QR half-mirror 2 cannot be completely removed unless the thickness of the inserted plane glass 9 is gradually changed. As can be seen from Equation (2), the amount of axial deviation due to the correction glass is not affected by θ.

However, there is more emphasis on the central field of view than on the peripheral in the actual optical system whether it is a case of the automatic focusing contrast calculation area or the captured image. That is, calculations are made with emphasis on the paraxial region of the peripheral beam 11 (at an angle of incidence θ close to 45 degrees), so the calculated results of Figure 4 are also employed with respect to θ = 45 degrees. This means that a plane glass thickness d' of 1.77 mm is employed to eliminate image deviation.

The effect of inserting the plane glass 9 compared to not inserting the plane glass 9 can be evaluated as follows.

With reference to Figure 4, the amount of focal deviation (δ) along the optical axis between when the QR half-mirror 2 is retracted from the optical axis and when it is inserted is a maximum of 0.70 mm when there is no plane glass 9. Inserting a plane glass 9 having a thickness of 1.77 mm corrects the deviation at the center of the viewing angle, so the range of deviation is 0.70 - 0.60 = 0.10 mm.

If the QR half-mirror 2 is retracted and no correction is made, such as by the insertion of the plane glass 9 in the case of the example of this embodiment, then the camera is, for example, operated using the automatic focus control conditions calculated with the QR half-mirror 2 in the non-retracted position. This will degrade the image quality. The degree of degradation vary depending on various factors such as the depth of field (stop) during the image pickup, so that the degradation will be severe if the depth of field is kept shallow.

In accordance with this embodiment, the deviation from the image-formation position when the QR half-mirror 2 was in the inserted position can be corrected by inserting the plane glass 9. Therefore, even if the system is operated using the automatic focusing control conditions calculated with the QR half-mirror 2 in the inserted position, the degree of image degradation will be reduced.

In particular, in accordance with this embodiment the plane glass 9 is inserted perpendicularly to the optical axis. This causes the effect of the plane glass 9 for correcting the image-formation position to act equally with respect to imaging light rays in various directions (refer to the non-dependence on angle of incidence θ of the peripheral beam in Equation (2)), and as shown in Figure 4, during imaging there is no image degradation caused by image-formation positional deviation arising from a dependency on the direction of the peripheral light involved in the image formation.

Thus, the use of the plane glass 9 makes it possible in accordance with the embodiment to correct changes in the image-formation position arising from the retraction of the QR half-mirror 2 from the optical axis.

After inserting the plane glass 9, the imaging element 3 images the subject for the exposure time, which is determined when the release button was half-pressed. When the imaging is completed, the control circuit 14 operates a drive motor (not shown) to return the QR half-mirror 2 and plane glass 9 to the standby position.

The terrestrial telescope with a digital camera according to the invention employs an optical-path-splitting means in the form of a half-mirror that is used to direct light from the subject to both the imaging element and the observation optical system. During imaging the half-mirror is removed from the main optical system, and an optical element (the plane glass 9) is inserted into the main optical system to correct for any deviation in the image-formation position caused by the retraction of the half-mirror. Therefore, there is no loss of incident light to the imaging element during the imaging. Moreover, no processor or memory has to be used, and the plane glass 9 used for the positional correction is a simple optical element, enabling deviation of the focus position to be corrected using a configuration that is very simple and low-cost. Since a half-mirror is used to split the optical path in this embodiment, the imaging element can be used during observation to acquire imaging data for various purposes such as exposure adjustments, monitor display and automatic focus adjustments.

Moreover, the plane glass 9 and the QR half-mirror 2 constituting the optical-path-splitting means are not maintained on separate levers but on the ends of a single, rigid mirror guide lever 8, which is used to position the QR half-mirror 2 and plane glass 9. This reduces the number of parts and enables the apparatus to be achieved easily and at a low cost. Also, there is very little error in the positioning of the QR half-mirror 2 and plane glass 9, ensuring precise correction of the image-formation position.

To facilitate the above explanation, the QR half-mirror 2 and plane glass 9 were described as being inserted into the main optical system at an angle of 45 degrees and 90 degrees respectively. However, it is to be understood that the invention is not limited to these conditions. Instead, the angles at which these members are disposed relative to the main optical system, as well as other design conditions, can be suitably modified as required.

This also applies to the angle between the QR half-mirror 2 and the plane glass 9, which was described as being 90 degrees. If required by the drive configuration, installation space or other such factors, the two members can be set at a different angle.

As mentioned above, it is described that, when the QR half-mirror 2 is retracted during imaging, the plane glass 9 is inserted to correct the image formation positional deviation $\delta$ in the optical axis direction.

The insertion of the plane glass 9 in the first embodiment enables the image formation positional deviation $\delta$ along the optical axis to be corrected. However, no consideration is made with respect to a shift of the imaging optical axis. As shown in Figure 2, the inclined insertion of the QR half-mirror 2 causes the image formation positional deviation $\Delta$ to arise in the (vertical) direction that intersects with the optical axis. In the first embodiment, it is, however, impossible to correct the image formation positional deviation $\Delta$.

To cancel the imaging optical axis shift, the QR half-mirror serving as the optical-path-splitting means is configured in this embodiment such that its light-transmitting surface constitutes a surface inclined relative to its reflecting surface (half-transmitting surface).

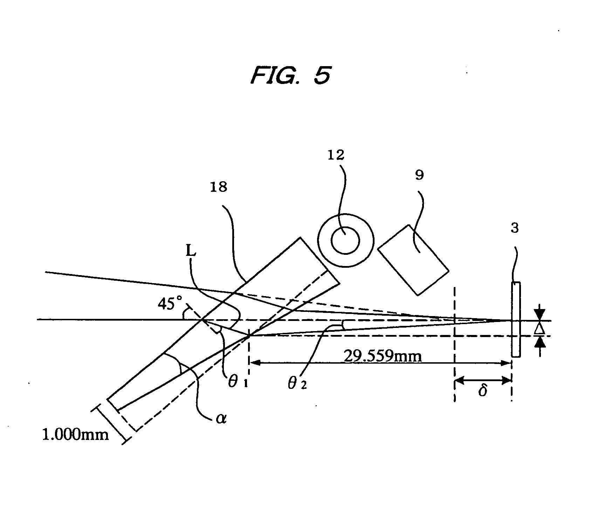

The configuration that the light-transmitting surface serving as the optical-path-splitting means constitutes a surface inclined relative to its reflecting surface is attained, for example, by a QR half-mirror 18 that is wedge-shaped in vertical cross section, as shown in Figure 5.

In the following, a second embodiment as shown in Figure 5 will be described, which is the same as the first embodiment except for the configuration in Figure 5. Also in the following, the same parts as those in the first embodiment or parts corresponding thereto are indicated by the same symbols and their detailed description will be omitted.

The mirror holder 8 supports the QR half-mirror 18 and the plane glass 9 similarly to the embodiment in Figure 1. The QR half-mirror 18 is controlled such that it is inserted into the optical path during observation, while the plane glass 9 is inserted into the optical path during imaging with the QR half-mirror 18 retracted therefrom.

The arrangement in Figure 5 is characterized in that the light beam shifted according to the reflection law by the front reflecting surface (half-transmitting surface) of the QR half-mirror 18, particularly the light beam in the central region is shifted back near to the center with the aid of the inclined rear light-transmitting surface of the QR half-mirror 18. This causes the light beam passing through the central region of the imaging element 3 to be corrected such that it advances substantially on the same path as when the QR half-mirror 18 is not inserted.

The calculation will now be described with respect to an angle $\alpha$ of the rear light-transmitting surface (inclined surface) of the QR half-mirror 18 relative to the front reflecting surface (half-transmitting surface) thereof.

It is now assumed that a simple plane QR half-mirror having a thickness of 1mm and a refractive index n=1.51633 is positioned 29.559 mm away from the imaging plane of the imaging element 3 and it is inserted at an angle of 45 degrees relative to the optical axis. The calculation is made in terms of the angle $\alpha$ of the rear light-transmitting surface (inclined surface) of the QR half-mirror 18 relative to the front reflecting surface (half-transmitting surface) thereof. It is to be noted that Figure 5 is an illustrative view without consideration of scales.

In this configuration, the refractive angle $\theta 1$ at which the light beam on the optical axis (central beam) falls incident on the QR half-mirror is $\theta 1 = 27.796$ degrees according to Snell's law, and hence the optical path length L along which the central beam passes through the QR half-mirror is L=1.130 mm.

It thus follows that the shift $\Delta$ of the optical axis along which the beam exits (shown by a broken line parallel with the optical axis) is 0.334 mm and the angle of incidence $\theta 2$ needed for the central beam to be concentrated back to the original center of the imaging element 5 is 0.647 degree.

The rear light-transmitting surface (solid) of the QR half-mirror 18 that is wedge-shaped as shown in Figure 5, therefore, must have an angle of inclination $\alpha$ that fulfills

$$1.51633 \times \sin(\theta_1 + \alpha) = 1 \times \sin(\theta_2 + 45^\circ + \alpha) \qquad (3)$$

according to Snell's law. Resolving the equation (3), the inclination angle $\alpha$ is obtained as $\alpha = 0.710$ degree (42'34" in minute and second units).

The employment of the wedge-shaped QR half-mirror 18 having such a narrow angle $\alpha$ provides the same effect as canceling the vertical shift of the imaging optical axis on the imaging element 3. The vertical shift of the imaging optical axis itself cannot be cancelled, but the vertical shift of the imaging optical axis caused by the QR half-mirror substantially disappears in the vicinity of the optical axis at the imaging plane of the imaging element 3.

The automatic focus control is performed during observation in the state as shown in Figure 5. The above-mentioned calculation applies only for the peripheral rays near to the optical axis. Therefore, the automatic focus area is set to the central area in the imaging range of the imaging element 3. This allows the automatic focus processing in a state where no vertical shift arises in the imaging optical axis.

It is to be noted that the image-formation positional deviation along the optical axis is corrected during imaging by inserting the plane glass 9 constituted similarly to the first embodiment with the QR half-mirror 18 retracted.

When the QR half-mirror 18 is retracted from the optical axis, the image-formation position deviates from the imaging element 3 in the optical axis direction by $\delta$. The image-formation position is corrected to the original position of the imaging element 3 by vertically inserting the plane glass 9 relative to the optical axis. The thickness of the correction glass 9 may be 1.77 mm that is the same as the plane QR half-mirror is used.

The optical-path-splitting means (QR half-mirror 18) that is wedge-shaped as shown in Figure 5 can be manufactured in the form of a half-mirror at a relatively low cost by shaping materials such as glass and providing it with a coating for imparting reflection, transmittance and filtering properties (applying similarly for the QR half-mirror 2 in the first embodiment).

Various modifications (the angle of insertion of the QR half-mirror, etc.) proposed for the first embodiment are also applicable for the second embodiment.

Industrial Applicability

As described in the foregoing, the invention employs an arrangement that comprises a group of objective lenses, an imaging element disposed behind said group of objective lenses and constituting an imaging optical system in cooperation with said group of objective lenses, a retractable optical-path-splitting means disposed as optical-path-splitting means between said group of objective lenses and said imaging element, an observation optical system for observing an optical image that is split outside of the optical path of said imaging optical system by said optical-path-splitting means, and an imaging position correction means in which, when said optical-path-splitting means is retracted from the optical axis of said imaging optical system, an optical element for correcting an change in image-formation position caused by retraction of said optical-path-splitting means is inserted into the optical axis of said imaging optical system in association with the retraction of said optical-path-splitting means. Imaging can therefore be continuously performed with no loss of light, and the focus position of the imaging element can be corrected by means of a configuration that is simple and low in cost, having no need for calculation means or means for driving and controlling the optical element.

In particular, the optical element is plane glass having a thickness that corrects a change in image-formation position in the optical axis direction caused by retraction of said optical-path-splitting means. This allows deviation in the focus position to be corrected with a straightforward, low-cost apparatus with a simple optical element.

Employed is also a configuration in which said imaging position correction means controls retraction of said optical-path-splitting means and insertion of said optical element by means of a guide lever member that supports said optical-path-splitting means on one end and said optical element on another end. Such a configuration uses few parts and is therefore simple and low-cost, but fully able to precisely correct the image-formation position.

Also, a configuration is used in which the plane glass is inserted perpendicularly to the optical axis of the imaging optical system. Such a configuration allows the corrective effect of the plane glass to be applied equally with respect to imaging light from any direction. It also serves to help optimize the automatic focusing control conditions and prevents degradation of the acquired image.

Also, a configuration is used in which the light-transmitting surface of said optical-path-splitting means is constituted as a plane that is inclined relative to the reflecting surface of said optical-path-splitting means so as to correct an image-formation positional deviation in the direction crossing the central optical axis due to the central optical axis deviation in said imaging element arising from when said optical-path-splitting means is inserted and when it is retracted. This advantageously allows the correction of not only a deviation in image-formation position in the optical axis direction, but also an image-formation positional deviation in the optical axis crossing direction (optical axis shift).

The optical-path-splitting means is a half-mirror, and can be manufactured at a relatively low cost by shaping materials such as glass and providing it with a coating for imparting reflection, transmittance and filtering properties.

**Claims**

1. A terrestrial telescope with a digital camera comprising:

    a group of objective lenses (1);
    an imaging element (3) disposed behind said group of objective lenses and constituting an imaging optical system in cooperation with said group of objective lenses;
    a retractable optical-path-splitting means (2) disposed as optical-path-splitting means between said group of objective lenses and said imaging element;
    an observation optical system (4, 5, 6, 7) for observing an optical image that is split outside of the optical path of said imaging optical system by said optical-path-splitting means; and
    an imaging position correction means; **characterised in that**

    the image position correction means comprises an optical element (9), such that when said optical-path-splitting means (2) is retracted from the optical axis of said imaging optical system, the optical element (9) is inserted into the optical axis of said imaging optical system in association with the retraction of said optical-path-splitting means, to correct a change in image-formation position caused by retraction of said optical-path-splitting means.

2. A terrestrial telescope with a digital camera according to claim 1, wherein said optical element (9) is plane glass having a thickness that corrects a change in image-formation position in the optical axis direction caused by retraction of said optical-path-splitting means.

3. A terrestrial telescope with a digital camera according to claim 1, wherein said imaging position correction means controls retraction of said optical-path-splitting means and insertion of said optical element by means of a guide lever member that supports said optical-path-splitting means on one end and said optical element on another end.

4. A terrestrial telescope with a digital camera according to claim 2, wherein said plane glass is inserted perpendicularly to the optical axis of said imaging optical system.

5. A terrestrial telescope with a digital camera according to claim 1, wherein the light-transmitting surface of said optical-path-splitting means is constituted as a plane that is inclined relative to the reflecting surface of said optical-path-splitting means so as to correct an image-formation positional deviation in the direction crossing the central optical axis due to the central optical axis deviation in said imaging element arising from when said optical-path-splitting means is inserted and when it is retracted.

6. A terrestrial telescope with a digital camera according to claim 5, wherein said optical-path-splitting means is a half-mirror.

**Patentansprüche**

1. Terrestrisches Teleskop mit einer Digitalkamera, umfassend:

    eine Gruppe von Objektivlinsen (1),
    ein Abbildungselement (3), das hinter der Gruppe von Objektivlinsen angeordnet ist und in Wirkverbindung mit der Gruppe von Objektivlinsen eine Abbildungsoptik bildet,
    eine zurückziehbare Strahlengangteilungseinrichtung (2), die als Strahlengangteilungseinrichtung zwischen der Gruppe von Objektivlinsen und dem Abbildungselement angeordnet ist,
    eine Beobachtungsoptik (4, 5, 6, 7) zum Beobachten einer optischen Abbildung, die außerhalb des Strahlengangs der Abbildungsoptik von der Strahlengangteilungseinrichtung geteilt wird, und
    eine Einrichtung zur Korrektur der Abbildungslage,

    **dadurch gekennzeichnet, dass**
    die Einrichtung zur Korrektur der Abbildungslage ein optisches Element (9) umfasst, dergestalt, dass beim Zurückziehen der Strahlengangteilungseinrichtung (2) von der optischen Achse der Abbildungsoptik das optische Element (9) in Verbindung mit dem Zurückziehen der Strahlengangteilungseinrichtung in die optische Achse der Abbildungsoptik eingesetzt wird, um eine Änderung der Bilderzeugungslage zu korrigieren, die durch das Zurückziehen der Strahlengangteilungseinrichtung verursacht ist.

**2.** Terrestrisches Teleskop mit einer Digitalkamera nach Anspruch 1, wobei das optische Element (9) ein Planglas mit einer Dicke ist, die eine durch das Zurückziehen der Strahlengangteilungseinrichtung verursachte Änderung der Bilderzeugungslage in Richtung der optischen Achse korrigiert.

**3.** Terrestrisches Teleskop mit einer Digitalkamera nach Anspruch 1, wobei die Einrichtung zur Korrektur der Abbildungslage das Zurückziehen der Strahlengangteilungseinrichtung und das Einsetzen des optischen Elementes mittels eines Führungshebelteils steuert, das an einem Ende die Strahlengangteilungseinrichtung und an einem anderen Ende das optische Element trägt.

**4.** Terrestrisches Teleskop mit einer Digitalkamera nach Anspruch 2, wobei das Planglas senkrecht zur optischen Achse der Abbildungsoptik eingesetzt wird.

**5.** Terrestrisches Teleskop mit einer Digitalkamera nach Anspruch 1, wobei die Lichtleitfläche der Strahlengangteilungseinrichtung als Ebene ausgebildet ist, die gegenüber der reflektierenden Fläche der Strahlengangteilungseinrichtung so geneigt ist, dass sie eine Lageabweichung bei der Bilderzeugung in der die mittlere optische Achse kreuzenden Richtung aufgrund der beim Einsetzen bzw. Zurückziehen der Strahlengangteilungseinrichtung entstehenden Abweichung der mittleren optischen Achse in dem abbildenden Element korrigiert.

**6.** Terrestrisches Teleskop mit einer Digitalkamera nach Anspruch 5, wobei die Strahlengangteilungseinrichtung ein Halbspiegel ist.

**Revendications**

**1.** Télescope terrestre équipé d'une caméra numérique comprenant :

. un groupe de lentilles (1) d'objectif ;
. un élément d'imagerie (3) prévu à l'arrière dudit groupe de lentilles d'objectif et constituant un système optique d'imagerie en association avec ledit groupe de lentilles d'objectif ;
. un moyen rétractable (2) de division du trajet optique prévu en tant que moyen de division du trajet optique entre ledit groupe de lentilles d'objectif et ledit élément d'imagerie ;
. système optique d'observation (4, 5, 6, 7) pour observer une image optique qui est divisée à l'extérieur du trajet optique dudit système optique d'imagerie par ledit moyen de division du trajet optique ; et
. un moyen de correction de la position de l'image ;

**caractérisé en ce que** le moyen de correction de la position de l'image comprend un élément optique (9) de sorte que lorsque ledit moyen (2) de division du trajet optique est rétracté de l'axe optique dudit système optique d'imagerie, l'élément optique (9) est inséré dans l'axe optique dudit système optique d'imagerie avec la rétraction dudit moyen de division du trajet optique, pour corriger un changement de position de la formation d'image provoqué par la rétraction dudit moyen de division du trajet optique.

**2.** Télescope terrestre équipé d'une caméra numérique selon la revendication 1, dans lequel ledit élément optique (9) est un verre plat présentant une épaisseur qui corrige un changement de position de la formation d'image dans la direction de l'axe optique provoqué par la rétraction dudit moyen de division du trajet optique.

**3.** Télescope terrestre équipé d'une caméra numérique selon la revendication 1, dans lequel ledit moyen de correction de la position de l'image commande la rétraction dudit moyen de division du trajet optique et l'insertion dudit élément optique au moyen d'un levier de guidage qui supporte ledit moyen de division du trajet optique à une extrémité et ledit élément optique à une autre extrémité.

**4.** Télescope terrestre équipé d'une caméra numérique selon la revendication 2, dans lequel ledit verre plat est inséré perpendiculairement à l'axe optique dudit système optique d'imagerie.

**5.** Télescope terrestre équipé d'une caméra numérique selon la revendication 1, dans lequel la surface transmettant la lumière dudit moyen de division du trajet optique est constituée d'un plan qui est incliné par rapport à la surface réfléchissante dudit moyen de division du trajet optique de manière à corriger la déviation de position de la formation d'image dans la direction coupant l'axe optique central en raison de la déviation de l'axe optique central dans ledit élément d'imagerie survenant lorsque ledit moyen de division du trajet optique est inséré et lorsqu'il est rétracté.

**6.** Télescope terrestre équipé d'une caméra numérique selon la revendication 5, dans lequel ledit moyen de division du trajet optique est un demi-miroir.

*FIG. 1*

# FIG. 2

# FIG. 3

# FIG. 4

DEVIATION AND THICKNESS OF CORRECTION GLASS
FOR EACH ANGLE OF INCIDENCE OF PERIPHERAL LIGHT
FOR d=1(mm),n=n'=1.51633

| $\theta$ (°) | $\delta$ (mm) | d' (mm) |
|---|---|---|
| 35 | 0. 52 | 1. 53 |
| 36 | 0. 53 | 1. 55 |
| 37 | 0. 54 | 1. 57 |
| 38 | 0. 54 | 1. 60 |
| 39 | 0. 55 | 1. 62 |
| 40 | 0. 56 | 1. 65 |
| 41 | 0. 57 | 1. 67 |
| 42 | 0. 58 | 1. 69 |
| 43 | 0. 59 | 1. 72 |
| 44 | 0. 59 | 1. 75 |
| 44. 999 | 0. 60 | 1. 77 |
| 45. 001 | 0. 60 | 1. 77 |
| 46 | 0. 61 | 1. 80 |
| 47 | 0. 62 | 1. 83 |
| 48 | 0. 63 | 1. 85 |
| 49 | 0. 64 | 1. 88 |
| 50 | 0. 65 | 1. 91 |
| 51 | 0. 66 | 1. 94 |
| 52 | 0. 67 | 1. 97 |
| 53 | 0. 68 | 2. 00 |
| 54 | 0. 69 | 2. 03 |
| 55 | 0. 70 | 2. 06 |

## FIG. 5

**EP 1 621 913 B1**

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003248266 A
- JP 2000162495 A
- JP 55106424 A